Europäisches Patentamt

European Patent Office

Office européen des brevets

(19)

(11) Veröffentlichungsnummer: **0 163 941**
**B1**

(12)

# EUROPÄISCHE PATENTSCHRIFT

(45) Veröffentlichungstag der Patentschrift:
02.11.88

(21) Anmeldenummer: 85105303.3

(22) Anmeldetag: 01.05.85

(51) Int. Cl.⁴: **B 60 K 41/20,** B 60 T 8/68

(54) Regelschaltung für die angetriebenen Räder eines Fahrzeugs.

(30) Priorität: 03.05.84 DE 3416292

(43) Veröffentlichungstag der Anmeldung:
11.12.85 Patentblatt 85/50

(45) Bekanntmachung des Hinweises auf die Patenterteilung:
02.11.88 Patentblatt 88/44

(84) Benannte Vertragsstaaten:
DE FR GB IT SE

(56) Entgegenhaltungen:
EP-A-0 064 669
DE-A-2 032 882
DE-A-2 131 536
DE-A-2 148 302
DE-A-3 127 301
FR-A-2 514 706

(73) Patentinhaber: ROBERT BOSCH GMBH, Postfach
50, D-7000 Stuttgart 1 (DE)

(72) Erfinder: Leiber, Heinz, Ing. (grad.), Theodor-
Heuss- Strasse 34, D-7141 Oberriexingen (DE)

(74) Vertreter: Kammer, Arno, Dipl.- Ing., ROBERT
BOSCH GmbH Zentralabteilung Patente
Postfach 50, D-7000 Stuttgart 1 (DE)

EP 0 163 941 B1

## Beschreibung

Die Erfindung betrifft eine Regelschaltung für die angetriebenen Räder eines Fahrzeugs zur Vermeidung des Durchdrehens der Räder gemäß dem Oberbegriff des Anspruchs 1.

Regelschaltungen der oben beschriebenen Art sind bekannt (z. B. DE-A-3 127 301). Dort wird, wenn ein Rad Durchdrehneigung zeigt, die zugehörige Radbremse mittels des Regelkreises betätigt und wenn beide angetriebenen Räder Durchdrehneigung zeigen, zusätzlich das Motorbremsmoment beeinflußt.

Bei Fahrzeugen mit solchen Regelungen, insbesondere bei Fahrzeugen mit Handschaltung ist das Anfahren insbesondere auf Untergrund mit kleinen Kraftschlußbeiwerten problematisch, weil der Motor nicht oder nicht schnell genug auf eine ausreichende Motordrehzahl gelangt.

Bei der erfindungsgemäß vorgeschlagenen Lösung gemäß den Merkmalen des Anspruchs 1 wird erreicht, daß der Motor auf eine ausreichende Drehzahl hochläuft.

Aus der EP-A-64 669 ist ein spezielles Antriebsregelsystem bekannt, bei dem der arithmetische Mittelwert der Drehzahlen der angetriebenen Räder gebildet und dieser Mittelwert mit der Drehzahl eines nicht angetriebenen Rads verglichen wird. Wird eine vorgegebene Differenz festgestellt, so wird das Motormoment reduziert. Parallel dazu werden auch die Drehzahlen der angetriebenen Räder mit dem Mittelwert verglichen und bei vorgegebenen Abweichungen wird (bzw. werden) die zugehörige(n) Bremse(n) betätigt. Dabei ist sichergestellt, daß durch den Motoreingriff die Motordrehzahl nicht unter einen vorgegebenen Wert, z. B. die Leerlaufdrehzahl, abgesenkt wird.

In den Unteransprüchen sind verschiedene beispielhafte Realisierungen beschrieben. Nähere Einzelheiten ergeben sich aus den anhand der Zeichnung beschriebenen Ausführungsbeispielen.

Es zeigen:

Fig. 1 den Verlauf der Fahrzeuggeschwindigkeit und der Geschwindigkeit der angetriebenen Räder über der Zeit bei einer ersten Regelungsart nach der Erfindung,

Fig. 2 den Verlauf dieser Geschwindigkeiten und der Motordrehzahl über der Zeit bei einer anderen Regelungsart,

Fig. 3 ein Blockschaltbild zur Realisierung der Regelung der Fig. 2.

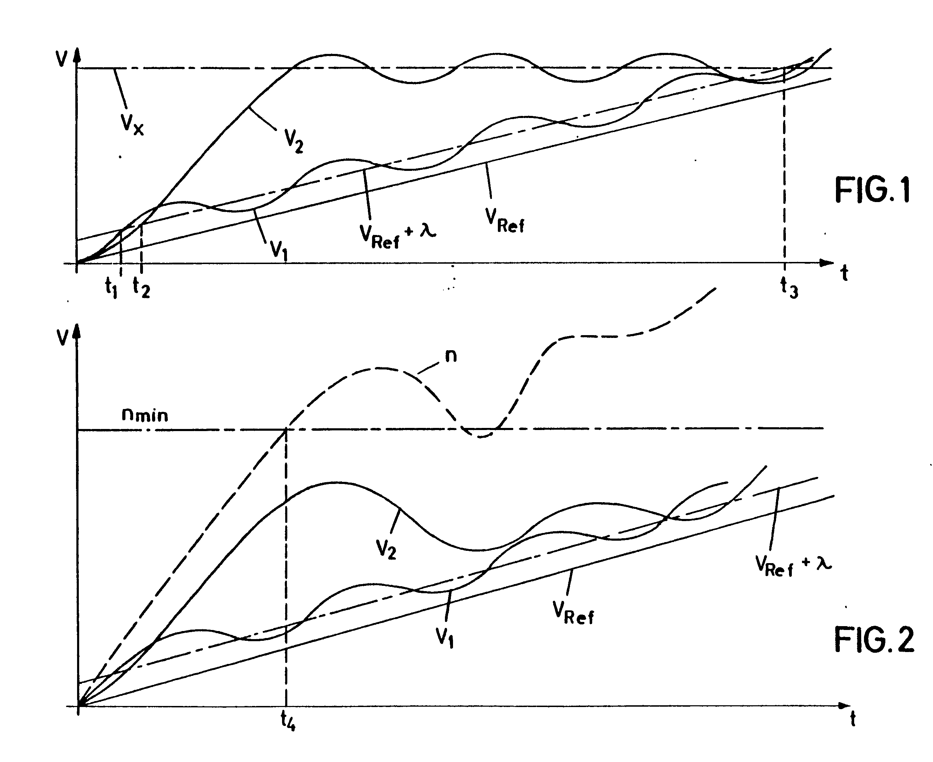

In Fig. 1 ist der Fahrzeuggeschwindigkeitsverlauf mit $V_{Ref}$ bezeichnet und die dazu parallele Ansprechschwelle für den Regeleinsatz mit $V_{Ref} + \lambda$, wobei $\lambda$ der zulässige (hier konstante) Schlupf ist. Wird auf einem Untergrund mit geringem Kraftschlußbeiwert stark beschleunigt, so überschreitet das erste Rad sehr schnell ($t_1$) mit seiner Radgeschwindigkeit $V_1$ die Ansprechschwelle $V_{Ref} + \lambda$ und wird dann durch Bremsbetätigung und Modulation des Bremsdrucks der zugehörigen Bremse um die Ansprechschwelle geregelt.

Bei der üblichen Regelung würde, da kurz danach auch das zweite angetriebene Rad mit der Radgeschwindigkeit $V_2$ die Ansprechschwelle überschreitet, auch dieses Rad durch die Regelung gebremst werden und/oder zusätzlich würde nun das Motormoment reduziert werden. Hierdurch würde aber die Motordrehzahl zu lange in einem für die Motorfunktion zu kleinen Drehzahlbereich verbleiben. Es wird deshalb die Regelung, die durch das später Durchdrehneigung zeigende Rad mit der Geschwindigkeit $V_2$ ausgelöst würde, gesperrt, sodaß dieses Rad zuerst einmal in einen großen Schlupf laufen kann. Erst bei einer vorgegebenen Schwelle $V_x$, die eine ausreichende Motordrehzahl garantiert, setzt dann für dieses Rad die Regelung ein. Die Radgeschwindigkeit $V_2$ wird nun um die Schwelle $V_x$ geregelt, bis die bei den Ansprechschwellen ($V_{Ref} + \lambda$) und $V_x$ sich bei $t_3$ treffen. Ab diesem Zeitpunkt wird dann auf Normalregelbetrieb umgeschaltet, d. h., daß z. B. auch das Rad mit der Geschwindigkeit $V_2$ anhand der Schwelle $V_{Ref} + \lambda$ geregelt gebremst und zusätzlich das Motormoment geregelt wird, wenn beide Räder diese Schwelle überschreiten. Auch in dem Regelbereich mit der Schwelle $V_x$ für das Rad mit der Geschwindigkeit $V_2$ kann gebremst und/oder das Motormoment (z. B. Drosselklappenverstellung) geregelt werden. Für das zuerst Durchdrehneigung zeigende Rad kann an Stelle einer Bremsung auch eine Regelung durch elektronische Ansteuerung des Sperrdifferentials erfolgen. In diesem Fall wird anstelle der Bremse der Sperrmechanismus durch ein entsprechendes Stellglied betätigt.

Beim Beispiel der Fig. 2 gilt für das Rad mit der Geschwindigkeit $V_1$ das, was im Zusammenhang mit Fig. 1 dazu gesagt wurde. Hinsichtlich des später Durchdrehneigung zeigenden Rads mit der Geschwindigkeit $V_2$ gilt nach wie vor, daß es bei Überschreiten der Schwelle $V_{Ref} + \lambda$ nicht geregelt wird, sondern zuerst einmal ungeregelt bleibt. Die Regelung für dieses Rad setzt erst ein, wenn die Motordrehzahl n einen vorgegebenen Wert $n_{min}$ bei $t_4$ überschreitet. Dann erst wird z. B. der Motoreingriff und/oder die Bremsung für dieses Rad freigegeben. Nach Fig. 2 ist, wie aus dem Verlauf n erkennbar, sowohl ein Motoreingriff als auch Bremseneingriff möglich. Ersteres erfordert die Auswertung des Hilfssignals Motordrehzahl.

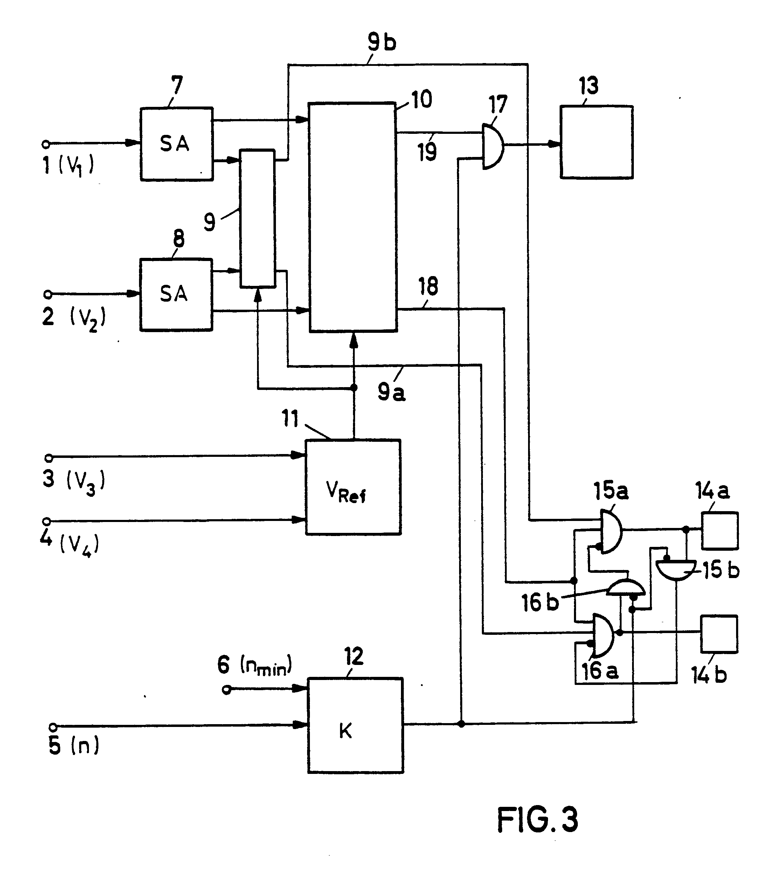

In Fig. 3 ist beispielhaft ein Blockschaltbild zur Durchführung der Regelung gemäß Fig. 2 gezeigt. An Klemmen 1 und 2 werden den Geschwindigkeiten $V_1$ und $V_2$ der angetriebenen Räder entsprechende Signale zugeführt, an Klemmen 3 und 4 den Geschwindigkeiten $V_3$ und $V_4$ der nicht angetriebenen Räder entsprechende Signale. Schließlich wird an einer Klemme 5 ein der Motordrehzahl n entsprechendes Signal und an einer Klemme 6 ein der minimalen Drehzahl $n_{min}$ entsprechendes Signal zugeführt. Blöcke 7 und 8 stellen Signalaufbereitungen für die Signale der angetriebenen Räder dar, 9 ist eine Erkennungsschaltung und 10 eine Logikschaltung. In einem Block 11 wird aus den Radgeschwindigkeiten $V_3$ und $V_4$ der nicht angetriebenen Räder das der Fahrzeuggeschwindigkeit $V_{Ref}$ entsprechende Signal gebildet. In einem Block 12 wird ein Ausgangssignal dann erzeugt, wenn die Motordrehzahl n (Klemme 5) größer als die vorgegebene Minimaldrehzahl $n_{min}$ (Klemme 6) ist. Blöcke 13 und 14a und b stellen Stellglieder dar. Dem Stellglied 13 ist ein Und-Gatter 17 vorgeschaltet, während den Stellgliedern 14a und 14b Und-Gatter 15a und 16a vorgeschaltet und Und-Gatter 15b und 16b zugeschaltet sind.

Die Signalaufbereitungen 7 und 8 erzeugen in der Erkennungsschaltung 9 und in der Logik 10 verarbeitbare, den Radgeschwindigkeiten $V_1$ und $V_2$ entsprechende Signale. In der Logik 10, der auch das der Referenzgeschwindigkeit $V_{Ref}$ entsprechende Signal zugeführt wird, werden Ausgangssignale auf verschiedenen Leitungen erzeugt, wenn eine der Radgeschwindigkeiten die Ansprechschwelle $V_{Ref} + \lambda$ überschreitet (Leitung 18) bzw. wenn beide Geschwindigkeiten $V_1$ und $V_2$ diese Ansprechschwelle überschreiten (Leitung 19). Zusätzlich wird in der Erkennungsschaltung 9 ermittelt, welches der Räder zuerst Durchdrehneigung zeigt. Davon abhängig wird zuerst auf der einen oder der anderen Ausgangsleitung 9a oder 9b ein Signal erzeugt. Zeigt auch das andere Rad Durchdrehneigung, so erscheint auch am anderen Ausgang 9b oder 9a ein Signal. Zu der Bestimmung, welches der Räder zuerst Durchdrehneigung zeigt (also $V_{Ref} + \lambda$ überschreitet), ist es notwendig, auch der Erkennungsschaltung 9 die Referenzgeschwindigkeit $V_{Ref}$ zuzuführen. $\lambda$ ist eine eingegebene Größe für den Schlupf.

Wenn also z. B. das linke Rad mit der Radgeschwindigkeit $V_1$ entsprechend Fig. 2 zuerst Durchdrehneigung zeigt, so soll die Ausgangsleitung 9b ein Signal aufweisen. Dieses Signal und das dann auch vorhandene Ausgangssignal auf Leitung 18 machen das Und-Gatter 15a durchlässig und steuern somit das Stellglied 14a, das dem linken Rad zugeordnet ist, an und regeln damit $V_1$ durch Bremsen entsprechend Fig. 2. Das Ausgangssignal des Und-Gatters 15a gelangt auch, wenn das Vergleichsglied 12 kein Ausgangssignal aufweist, über das Und-Gatter 15b zum Und-Gatter 16a und sperrt damit das Und-Gatter 16a, sodaß bei einer später auftretenden Durchdrehneigung am rechten Rad, dieses Rad nicht gebremst wird, solange nicht $n_{min}$ überschritten ist. Umgekehrt wird das Und-Gatter 15a gesperrt, und damit das Stellglied 14a nicht betätigt, wenn zuerst das rechte Rad Durchdrehneigung zeigt und $n_{min}$ noch nicht erreicht ist. Oberhalb von $n_{min}$ werden beide Räder ab Auftreten der zugehörigen Signale an den Ausgängen der Erkennungsschaltung 9 geregelt gebremst. Mittel zur geregelten Bremsung sind z. B. aus der DE-A-3 127 301 bekannt. Die Abbremsung des schneller durchdrehenden Rades erfolgt ggf. nur über eine kurze Zeitdauer, bis die Abnahme des Motormomentes wirksam ist.

Bei Durchdrehneigung an beiden Rädern soll außerdem, wenn $n_{min}$ überschritten ist, das Motorbremsmoment abgeschwächt werden (z. B. Drosselklappenverstellung). Das diesen Zustand anzeigende Signal auf Leitung 19 gelangt dann über das Und-Gatter 17 zum Stellglied 13, das die Drosselklappe geregelt verstellt. Unterhalb der Minimaldrehzahl jedoch ist das Und-Gatter 17 ebenfalls gesperrt, sodaß das Stellglied 13 bis zum Erreichen von $V_{min}$ nicht ansprechen kann und damit kein Motoreingriff erfolgt.

**Patentansprüche**

1. Regelschaltung für die angetriebenen Räder eines Fahrzeugs zur Vermeidung des Durchdrehens der Räder mit einer Auswerteschaltung, der den Radgeschwindigkeiten der angetriebenen Räder entsprechende Signale und ein der Fahrzeuggeschwindigkeit entsprechendes Signal zugeführt werden, wobei die Auswerteschaltung normalerweise bei durch einen entsprechenden Schlupf angezeigter Burchdrehneigung an einem angetriebenen Rad einen nur auf dieses Rad einwirkenden und dort eine Momentenreduzierung bewirkenden Eingriff auslöst, und wobei die Auswerteschaltung bei durch Schlupf angezeigter Durchdrehneigung an beiden angetriebenen Rädern einen zweiten, eine Momentenreduzierung an beiden Rädern bewirkenden Eingriff auslöst, dadurch gekennzeichnet, daß im Bereich kleiner Raddrehzahlen nur das zuerst Durchdrehneigung zeigende Rad geregelt wird und das andere Rad trotz vorhandener Durchdrehneigung so lange unbeeinflußt bleibt, bis ein Schwellwert erreicht ist, bei dem eine ausreichende Motordrehzahl vorliegt.

2. Regelschaltung nach Anspruch 1, dadurch gekennzeichnet, daß das zuerst Durchdrehneigung zeigende Rad gebremst wird.

3. Regelschaltung nach Anspruch 1, dadurch gekennzeichnet, daß das zuerst Durchdrehneigung zeigende Rad durch Steuerung des Sperrdifferentials geregelt wird.

4. Regelschaltung nach einem der Ansprüche 1 bis 3, dadurch gekennzeichnet, daß auch das andere Rad nach Erreichen des Schwellwerts gebremst wird.

5. Regelschaltung nach einem der Ansprüche 1 bis 3, dadurch gekennzeichnet, daß, sobald der Schwellwert erreicht ist, das Motormoment geregelt wird.

6. Regelschaltung nach einem der Ansprüche 1 bis 5, dadurch gekennzeichnet, daß der Schwellwert eine vorgegebene Radgeschwindigkeit des anderen Rads ist.

7. Regelschaltung nach einem der Ansprüche 1 bis 5, dadurch gekennzeichnet, daß der Schwellwert eine vorgegebene Drehzahl des Motors ist.

**Claims**

1. Regulating circuit for the driven wheels of a vehicle to avoid spinning of the wheels, with an evaluation circuit to which signals corresponding to the wheel speeds of the driven wheels and a signal corresponding to the vehicle speed are fed, the evaluation circuit normally triggering an intervention when there is a tendency to spin at a driven wheel, indicated by a corresponding skid, the intervention only acting on this wheel and causing a torque reduction there, and the evaluation circuit triggering a second intervention when there is a tendency to spin at both driven wheels, indicated by skid, this intervention causing a torque reduction at both wheels, characterized in that, in the range of low wheel speeds, only the first wheel displaying a tendency to spin is regulated and the other wheel remains uninfluenced, in spite of an existing tendency to spin, until a threshold value is reached at which an adequate engine speed is available.

2. Regulating circuit according to claim 1, characterized in that the wheel first displaying a tendency to spin is braked.

3. Regulating circuit according to claim 1, characterized in that the wheel first displaying a tendency to spin is regulated by controlling of the locking differential.

4. Regulating circuit according to one of claims 1 to 3, characterized in that the other wheel is braked after reaching the threshold value.

5. Regulating circuit according to one of claims 1 to 3, characterized in that, as soon as the threshold value is reached, the engine torque is regulated.

6. Regulating circuit according to one of claims 1 to 5, characterized in that the threshold value is a predetermined wheel speed of the other wheel.

7. Regulating circuit according to one of claims 1 to 5, characterized in that the threshold value is a predetermined speed of the engine.

**Revendications**

1. Circuit de réglage pour les roues motrices d'un véhicule, pour éviter le patinage des roues, comportant un circuit d'interpérétation auquel sont amenés des signaux correspondant aus vitesses des roues motrices et un signal correspondant à la vitesse du véhicule, le circuit d'interprétation déclenchant normalement, lors d'une tendance au patinage d'une roue motrice, indiquée par un glissement correspondant, une intervention n'agissant que sur cette roue et provoquant une réduction de couple, et le circuit d'interprétation déclenchant une intervention provoquant une deuxième réduction de couple sur les deux roues motrices dans le cas où elles ont une tendance au patinage indiquée par du glissement, caractérisé par le fait que, dans le domaine des petites vitesses de rotation de roue, seule la roue qui est la première à présenter une tendance au patinage est réglée, et l'autre roue, bien qu'ayant une tendance au patinage, reste non influencée jusqu'à ce que soit atteinte une valeur de seuil en présence de laquelle existe une vitesse de rotation suffisante du moteur.

2. Circuit de réglage selon revendication 1, caractérisé par le fait que la roue qui est la première à présenter une tendance au patinage est freinée.

3. Circuit de réglage selon revendication 1, caractérisé par le fait que la roue qui est la première à présenter une tendance au patinage est réglée par commande du différentiel à verrouillage.

4. Circuit de réglage selon l'une des revendications 1 à 3, caractérisé par le fait que l'autre roue est aussi freinée après que la valeur de seuil a été atteinte.

5. Circuit de réglage selon l'une des revendications 1 à 3, caractérisé par le fait que le couple du leur est réglé dès que la valeur de seuil est atteinte.

6. Circuit de réglage selon 1, une des revendications 1 à 5, caractérisé par le fait que la valeur de seuil est une vitesse prédéterminée de l'autre roue.

7. Circuit de réglage selon l'une des revendications 1 à 5, caractérisé par le fait que la valeur de seuil est une vitesse de rotation prédéterminée du moteur.

FIG.1

FIG.2

0 163 941

FIG.3